# EUROPEAN PATENT APPLICATION

(11) **EP 3 266 570 A1**
(43) Date of publication of application: **10.01.2018**
(21) Application number: 16178572.0
(22) Date of filing: 08.07.2016
(51) Int. Cl.: B25J 9/16

(54) **METHOD FOR ANTI-COLLISION MANAGEMENT OF OVERLAPPING ROBOTIC MOVEMENTS**

(71) Applicant: Siemens Industry Software Ltd., 7019900 Airport City (IL)
(72) Inventor: DAVIDI, Dror, 4535607 Hod Hasharon (IL); MADVIL, Rahav, 7523409 Rishon Lezion (IL); HAZAN, Moshe, 4083918 Elad (IL)
(74) Representative: Maier, Daniel Oliver

(57) **Abstract**

Systems and a method for anti-collision management of two or more robots with at least partially overlapping robotic movements. The systems and method include receiving inputs from two or more single robots performing robotic operations along a trajectory defining for each robot a single swept volume. Discretized subswept volumes are created between robotic path locations for each single robot according to one or more discretization criteria such that the operation of each single robot moving along the known trajectory is controlled in order to allow synchronized execution of robotic operations, whereby only overlapping discretized subswept volumes are considered for synchronization. This enables focusing only on the relevant collision-prone areas. Deadlocks can be prevented by a look-ahead behavior. Smart synchronization methodology allows optimizing cycle time.

## Description

### TECHNICAL FIELD

The present disclosure is directed, in general, to computer-aided design, visualization, and manufacturing ("CAD") systems, product lifecycle management ("PLM") systems, product data management ("PDM") systems, and similar systems, that manage data for products and other items (collectively, "Product Data Management" systems or PDM systems), and in particular to methods and systems for anti-collision management of two or more robots with at least partially overlapping robotic movements.

### BACKGROUND OF THE DISCLOSURE

Robots are widely used in industrial applications and fulfill robotic operations along a trajectory. Collisions, which happen when two or more robots share the same space at the same time, are to be avoided, because they can result in serious damage to the robots, as well as the work pieces handled by them. Currently, collision handling of robots is done by defining overlapping areas where the single swept volumes of individual single robots overlap. As the trajectories of individual single robots who share this overlapping area may overlap within said overlapping area, only one robot at time is allowed to enter said overlapping area at a time. Other robots who share this overlapping area are meanwhile forced to be idle and thus unproductive.

As robots often share the entire work area in a very crowded shop-floor, the overlapping areas are numerous and widespread which leads to a great increase in production cycle time. This reduces efficiency and limits robot synchronization capabilities tremendously. Methods for collision handling that reduce idle waiting times of robots by allowing robots to execute robotic operations simultaneously are therefore required.

### SUMMARY OF THE DISCLOSURE

Various disclosed embodiments include methods and systems for anti-collision management of two or more single robots, in particular industrial robots, performing robotic operations. The systems and method include: receive inputs including a trajectory that each single robot follows to fulfill its robotic operations, whereby each single robot along its trajectory is located within a single swept volume and whereby the robotic operations of two or more single robots take place at least partly in a shared space such that at least two of the single swept volumes of individual single robots form an overlapping area wherein collisions between robots may occur. The systems and method includes: create discretized subswept volumes between robotic path locations for each single robot according to one or more discretization criteria. Only overlapping discretized subswept volumes of two or more single robots are considered for synchronization. The systems and method enables to control the two or more robots to reduce collisions while reducing idle waiting time of the one or more single robots simultaneously

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
Figure 1 illustrates a block diagram of a data processing system in which an embodiment can be implemented;
Figure 2 is a schematic illustration of a robot synchronization according to prior art;
Figure 3 is a schematic view of the two robots of Figure 2, whereby their single swept volumes are subdivided;
Figure 4 illustrates schematically a potentially arising deadlock-situation of two robots; and
Figure 5 illustrates a flowchart of a process to optimally manage collisions between robots in accordance with disclosed embodiments.

### DETAILED DESCRIPTION

FIGURES 1 through 5, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

Determining the most efficient synchronization for the cooperative execution of robotic operations of two or more robots in order to achieve minimal cycle time and to increase efficiency requires consideration of numerous constraints including whether any collisions occur between the robots, whether robots run into dead-lock situations, and which one of the robots is given prioritization when cooperative execution is not possible due to collisions and/ or dead-lock situations, along with other considerations.

Robots perform robotic operations, whereby each single robot along its trajectory is located within a single swept volume. When the robotic operations of two or more individual single robots share the same space, at least parts of the single swept volumes of individual single robots form an overlapping area wherein collisions between robots may occur. Allowing only one individual single robot at time to enter the overlapping area reduces the risk of collisions, but increases production cycle time tremendously.

Each new overlapping area and/ or each additional third or more robot sharing the overlapping area of two or more single swept volumes lead to additional episodes of idle waiting time during the performance of robotic operations. This issue is further amplified because a typical shop-floor is very crowded and industrial robots often share the entire work area.

Applying this approach on every robot in a production line reduces the idle waiting time tremendously, resulting in optimized cycle time and thus reduced overall production costs.

Figure 1 illustrates a block diagram of a data processing system in which an embodiment can be implemented, for example as a PDM system particularly configured by software or otherwise to perform the processes as described herein, and in particular as each one of a plurality of interconnected and communicating systems as described herein. The data processing system illustrated can include a processor 102 connected to a level two cache/bridge 104, which is connected in turn to a local system bus 106. Local system bus 106 may be, for example, a peripheral component interconnect (PCI) architecture bus. Also connected to local system bus in the illustrated example are a main memory 108 and a graphics adapter 110. The graphics adapter 110 may be connected to display 111.

Other peripherals, such as local area network (LAN) / Wide Area Network / Wireless (e.g. WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices. The storage 126 stores the robot information 150 and its robotic operation information 152. The Robotic operation information 152 may include for example the trajectory information 154, the position information 156, the time indexing information 158, the prioritization information 160, and so on, which are described below.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, touchscreen, etc.

Those of ordinary skill in the art will appreciate that the hardware illustrated in Figure 1 may vary for particular implementations. For example, other peripheral devices, such as an optical disk drive and the like, also may be used in addition or in place of the hardware illustrated. The illustrated example is provided for the purpose of explanation only and is not meant to imply architectural limitations with respect to the present disclosure.

A data processing system in accordance with an embodiment of the present disclosure can include an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows™, a product of Microsoft Corporation located in Redmond, Wash. may be employed if suitably modified. The operating system is modified or created in accordance with the present disclosure as described.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

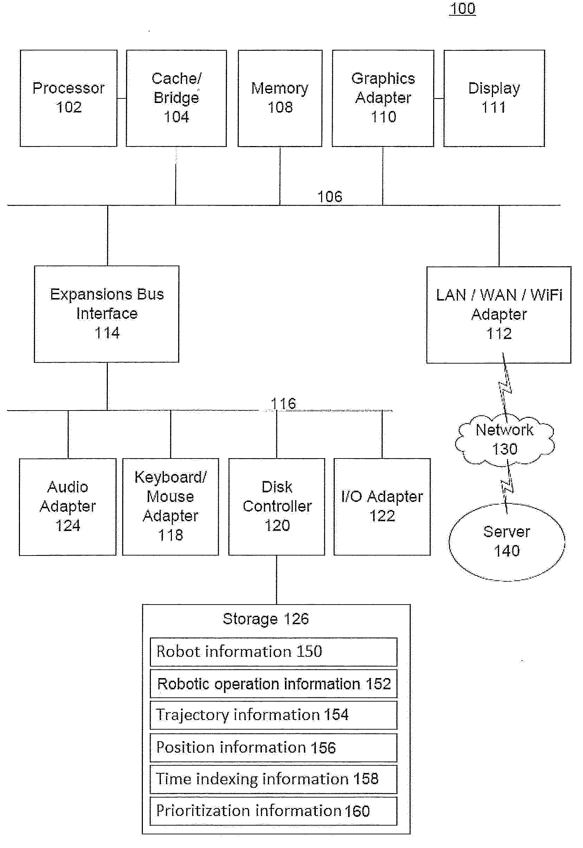

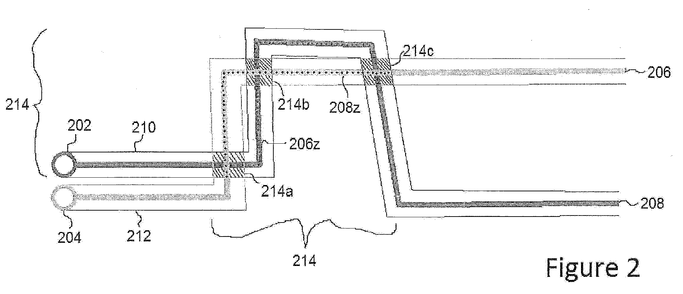

Figure 2 is a schematic illustration of a method for anti-collision management of overlapping robotic movements according to prior art: shown are two robots 202, 204 performing robotic operations along their trajectories 206, 208 such that the robots are always located within their single swept volumes 210, 212. The single swept volumes 210, 212 represent the captured volume during operation. The robots 202, 204 may collide with each other whenever their single swept volumes 210, 212 form a single overlapping area 214. It has to be emphasized that area is used for three-dimensional objects, whereas it can also be used more general to also describe two-dimensional objects.

The single overlapping area 214 is encountered whenever the robots 202, 204 are located on the parts 206z, 208z of the trajectories 206, 208 (graphically indicated by crosses). However, only the overlapping segments 214a, 214b, 214c of the single overlapping area 214 are actually relevant collision-prone areas where collisions may occur. In order to avoid collision with a method of prior art, whenever one of the robots 202, 204 as for instance the robot 204 enters the overlapping area, the other robot 202 who shares this overlapping area 214 is idle and cannot move until the overlapping area 214 is cleared by the robot 204.

The idle waiting time of the robot 202 is a considerable proportion of the total runtime, assumed that runtime and swept volume correlate with each other in some respects. When more than two robots 202, 204 are involved in a process in a very crowded shop-floor, many single overlapping areas are formed and/ or the single overlapping areas are shared by more than only two robots. This greatly increases production cycle time, reduces efficiency and limits robot synchronization capabilities.

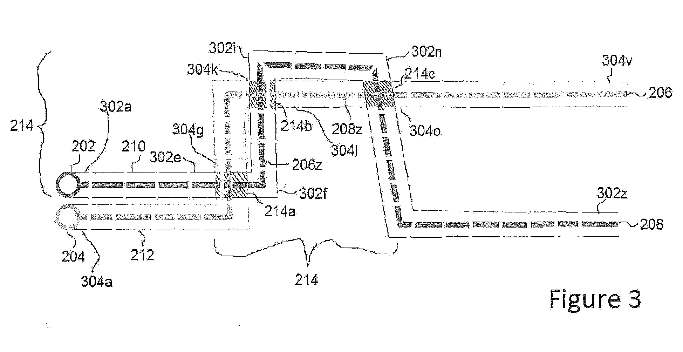

Figure 3 is a schematic view of the two single robots 202, 204 of Figure 2 illustrating a method for anti-collision management in accordance with the disclosed embodiments. The two single robots 202, 204 perform robotic operations, whereby the data processing system receives inputs including the trajectories 206, 208 that each single robot 202, 204 follows to fulfill its robotic operations. As already shown in Figure 2, each single robot 202, 204 along its trajectory 206, 208 is located within a single swept volume. The robotic operations of the two robots 202, 204 take place at least partly in a shared space such that their single swept volumes form the overlapping area 214 with collision prone segments 214a, 214b, 214c.

Discretized subswept volumes are created between robotic path locations for each single robot according to one or more discretization criteria. The single swept volumes 210, 212 are thus divided, as can be seen in Figure 3. Time indexing is added to the robotic operations of all subswept volumes in order to allow on-line knowledge about the robot's position and to enable application of a smart synchronization methodology which will be described in more detail below.

The subswept volumes 302a, 302e, 302f, 302i, 302n, 302z of the robot 202 and the subswept volumes 304a, 304g, 304k, 3041, 304o, 304v of the robot 204 are indicated. A combination of all subswept volumes 302a - 302z of robot 202, and of all subswept volumes 304a - 304v of robot 204 respectively yields exactly the single swept volume 210 and 212 respectively.

Overlapping with the subswept volumes of the respective other robot are only the subswept volumes 302e, 302f, 302i, 302n, 304g, 304k, 3041, 304o. The neighboring single swept volumes 302e, 302f overlap with the single swept volume 304g comprising the overlapping segment 214a. The single swept volume 302i overlaps with the neighboring single swept volumes 304k, 3041 comprising the overlapping segment 214b. The single swept volumes 302n overlaps with the single swept volume 304o comprising the overlapping segment 214c.

The operation of each single robot moving along the known trajectory is controlled in order to allow synchronized execution of robotic operations. Synchronization can be event based and/ or time based. For robotic synchronization, only said overlapping discretized subswept volumes 302e, 302f, 302i, 302n, 304g, 304k, 3041, 304o need to be considered for robotic synchronization instead of the entire single overlapping area 214 as done in prior art. Therefore, the robots 202, 204 can simultaneously perform their robotic operations within all of their other subswept volumes. Both robots 202, 204 can start moving immediately and continue working until the overlapping area 214, more specifically the first overlapping subswept volumes 302e, 304g comprising the first small overlapping segment 214a is reached. Robot 204 only needs to wait idle during the runtime of the two subswept volumes 302e, 302f before entering the subswept volume 304g and not during the entire runtime of the robotic operations performed within the entire overlapping area 214. The other robot 304 can enter the subswept volume 304g immediately after the robot 302 has cleared the subswept volume 302f. The described method is applied repeatedly for each single overlapping subswept volume.

Once the overlapping segment 214a is encountered, an operation priority is assigned being based upon a prioritization criteria. The operation priority is assigned even if there is currently no other robot operating within said overlapping segment 214a, especially in order to avoid potential deadlock situations. The prioritization criteria identify which of the single robots has a higher priority, whereby the prioritization criteria are selected from a group consisting consisting of speed, importance, runtime, look-ahead behavior, acceleration characteristics and the like. These prioritization criteria enable a full picture of all possible future collisions. Therefore, it can be planned what is the best solution that allows an efficient completion of the whole process by achieving minimal cycle time. Figure 3 depicts the basic concept of anti-collision management for two robots 202, 204, but this basic concept can be expanded to three or more single robots.

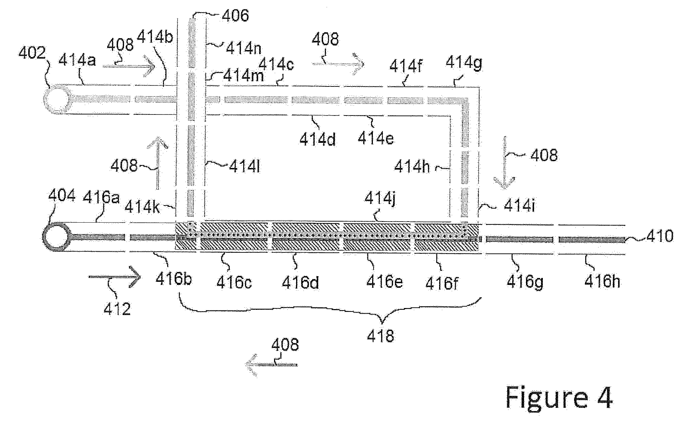

Figure 4 illustrates schematically a potentially arising deadlock-situation of two robots 402, 404 in accordance with disclosed embodiments. Initially, both robots 402, 404 are located graphically on the left hand side of the drawing. The robot 402 follows its trajectory 406 moving along its direction of movement 408 first to the right and then downwards before making a change of direction to the left and then again upwards. The robot 404 on the other hand only moves linear to the right along its trajectory 410 following its direction of movement 412. Discretized subswept volumes 414a - 414n, 416a - 416h are created at runtime between robotic path locations of both robots 402, 404. Whenever one of the robots enters a section of the trajectories 406, 410 marked with crosses, it is located within an overlapping area 418 where collisions might occur. The discretized subswept volumes 414a - 414n, 416a - 416h are created at runtime according to one or more discretization criteria. The one or more discretization criteria are selected from a group consisting of time, location, volume, speed, subgrouping of the robotic operations in order to achieve subswept volumes 414a - 414n, 416a - 416h that can be handled optimally. The subswept volumes 416a - 416h of the linearly moving robot 404 are created between equidistant robotic path locations. Therefore, all of the said subswept volumes 416a - 416h are of equal volume. The subswept volumes 414a - 414n of the robot 402 with changing direction of movement 408 are created according to a different discretization criteria. The subswept volume 414j comprises all of the overlapping area 418.

The potential deadlock-situation can arise because the robot 402 changes its direction of movement 408 shortly after entering the subswept volume 414j. If the other robot 404 moves into its direction of movement 412, opposite to the direction of movement 408 of the first robot 402, and enters the overlapping area 418 partly located within its subswept volume 416b, both robots may block each other's way. Therefore, in order to avoid deadlocks, time indexing is added to the robotic operations of all subswept volumes 414a - 414n, 416a - 416h. The time indexing enables application of the smart synchronization technology which prevents from a robot 402 to enter the overlapping area 418, even if there is currently no other robot 404 inside. The decision whether the robot 402 is allowed to enter the overlapping area 418 is done once the overlapping area 418 is encountered. An operation priority is assigned being based upon a prioritization criteria whereby the operation priority is assigned even if there is currently no other robot 404 operating within the overlapping area 418. This prevents the occurrence of deadlock situations.

The robot 402 waits idle while the other robot 404 performs robotic operations within its subswept volumes 416b - 416f comprising the overlapping area 418. After clearing the overlapping area 418, the other robot 402 enters the subswept volume 414j comprising the overlapping area 418.

The prioritization criteria identify which of the single robots 402, 404 has a higher priority and therefore enable implementation of a smart synchronization technology. The prioritization criteria are selected from a group consisting of speed, importance, runtime, look-ahead behavior, acceleration characteristics and the like. If both robots 402, 404 require the same runtime for all of their remaining subswept volumes 414a - 414n, 416a - 416h after clearing the overlapping area 418, it may be advantageous to give priority to the one of the robots 402, 404 that passes the overlapping area 306 the fastest. Besides speed and runtime, other considerations may contribute to the prioritization, e.g. consideration of possible next encountered overlapping swept volumes, different accelerations of the robots 402, 404.

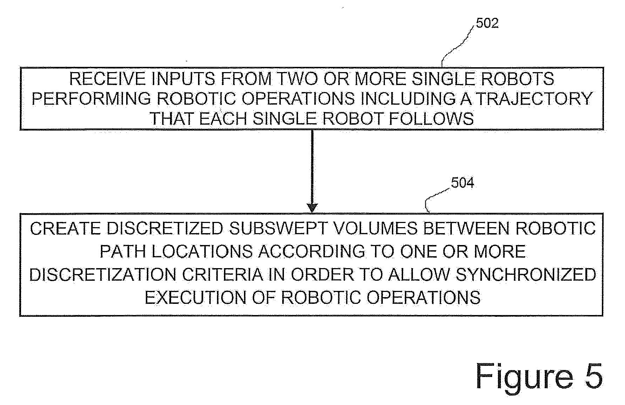

Figure 5 illustrates a flowchart of a process for optimally tooling a robot in accordance with disclosed embodiments. The anti-collision management of overlapping robotic movements is performed by a data processing system, such as the data processing system 100 of Figure 1. The system receives inputs from two or more single robots performing robotic operations including a trajectory that each single robot follows (step 502). For each single robot, the inputs may include in detail a robot information 150 and a robotic operation information 152. From this, a trajectory information 154, a position information 156, a time indexing information 158 and a prioritization information 160 can be calculated at runtime. Another option could be to provide the trajectory information 154, the position information 156, the time indexing information 158 and the prioritization information 160 at least partially as operation input.

The robot information 150 can include the specific tasks that the robot fulfills, the dimensions of the robot, the robot's surrounding, the objects which are mounted on the robot, and any objects pertinent to the placement or location of the robot. The robotic operation information 152 can include all information about the robotic operations of the robot. The trajectory information 154, that can also be extracted from the robotic operation information 152, alongside with the dimensions of the robots is needed and can be used to calculate the swept volumes within which each single robot along its trajectory is located. The robotic operation information 152 alongside with the dimensions of the robot and its surrounding enables knowledge about the single swept volumes within which each single robot along its trajectory is located. However, an a priori calculation of the single swept volume of each single robot is not needed in order to apply the method for anti-collision management. The robotic operations of two or more single robots take place at least partly in a shared space. The system identifies which of the single swept volumes of individual single robots form an overlapping area wherein collisions between robots may occur. One or more of the processor 102 and the memory 108 running on the processor 102 receive the inputs via one or more of the local system bus 106, the adapter 112, the network 130, the server 140, the interface 114, the I/O bus 116, the disk controller 120, the storage 126, and so on. Receiving, as used herein, can include retrieving from storage 126, receiving from another device or process, receiving via an interaction with a user, or otherwise.

The system then creates discretized subswept volumes between robotic path locations according to one or more discretization criteria in order to allow synchronized execution of robotic operations (step 504). In the case where a robot moves back and forth during its operation, neighboring subswept volumes may at least partially overlap. The overlapping area consists in this case of many small individual overlapping areas. The operation of each single robot moving along the known trajectory is controlled in order to allow synchronized execution of robotic operations, whereby only overlapping discretized subswept volumes of different individual robots are considered for synchronization. This enables to control the two or more robots to reduce collisions while reducing idle waiting time of the other one or more single robots simultaneously. The robots can work simultaneously everywhere but in the overlapping area.

The system applies smart synchronization methodology to control each single robot using the provided or calculated time indexing information 158 of all subswept volumes alongside with the prioritization information 160 and the robotic operation information 152, especially the trajectory information 154. Smart synchronization methodology takes into account and/ or predicts all movement possibilities, deciding for any given overlapping area what should be the prioritization between robots in order to achieve minimal cycle time. To synchronize the robots, events and signals can also be used. For example, one robot can wait for the other robot to send a signal that it has left an overlapping area.

Each single swept volume is subdivided according to one or more discretization criteria in order to achieve optimal subdivision. The one or more discretization criteria are selected from a group consisting of time, location, volume, speed and logical subgrouping of the robotic operations. The discretization criteria time might be chosen such that the runtime of robotic operations executed within each subswept volume is equal which simplifies time indexing. Location as discretization criteria can be chosen such that all trajectory sections between starting and end path location of the robot are equal. When a robot has a constant speed at each point of the trajectory, the discretization criteria time and location are congruent with each other. Equal initial subswept volumes may result when volume is chosen as discretization criteria. The discretization criteria speed can be applied in a way being congruent to time, or involve a subgrouping of the robot's speed. For instance, when the robot moves linearly with constant speed along its trajectory, a subswept volume can be created such that the robot is located within said subswept volume until it changes its speed. On the one hand, subgrouping of the robotic operations is more broadly defined and can be congruent with the above mentioned discretization criteria, but on the other hand it can mean a subdivision such that a robot is executing specific tasks within one subswept volumes, while it only displaces itself within the other subswept volumes.

Of course, those of skill in the art will recognize that, unless specifically indicated or required by the sequence of operations, certain steps in the processes described above may be omitted, performed concurrently or sequentially, or performed in a different order.

Those skilled in the art will recognize that, for simplicity and clarity, the full structure and operation of all data processing systems suitable for use with the present disclosure is not being illustrated or described herein. Instead, only so much of a data processing system as is unique to the present disclosure or necessary for an understanding of the present disclosure is illustrated and described. The remainder of the construction and operation of data processing system 100 may conform to any of the various current implementations and practices known in the art.

It is important to note that while the disclosure includes a description in the context of a fully functional system, those skilled in the art will appreciate that at least portions of the mechanism of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, or function is an essential element which must be included in the claim scope: the scope of patented subject matter is defined only by the allowed claims. Moreover, none of these claims are intended to invoke paragraph six of 35 US §112 unless the exact words "means for" are followed by a participle.

## Claims

1. A method for anti-collision management of two or more single robots performing robotic operations, the method performed by a data processing system comprising the following steps:
a) receive inputs including a trajectory that each single robot follows to fulfill its robotic operations, whereby:
- each single robot along its trajectory is located within a single swept volume;
- the robotic operations of two or more single robots take place at least partly in a shared space such that at least two of the single swept volumes of individual single robots form an overlapping area wherein collisions between robots may occur;
b) create discretized subswept volumes between robotic path locations for each single robot according to one or more discretization criteria such that the operation of each single robot moving along the known trajectory is controlled in order to allow synchronized execution of robotic operations, whereby only overlapping discretized subswept volumes are considered for synchronization.

2. The method according to claim 1, **characterized in that**
the one or more discretization criteria are selected from a group consisting of:
- time;
- location;
- volume;
- speed;
- subgrouping of the robotic operations.

3. The method according to any one of the claims 1-2, **characterized in that** time indexing is added to the robotic operations of all subswept volumes.

4. The method according to any one of the claims 1-3, **characterized in that** once an overlapping area of the subswept volumes of two single robots is encountered, an operation priority is assigned being based upon a prioritization criteria whereby the operation priority is assigned even if there is currently no other robot operating within the overlapping area.

5. The method according to claim 4, **characterized in that**
the prioritization criteria identify which of the single robots has a higher priority, whereby the prioritization criteria are selected from a group consisting of speed, importance, runtime, acceleration and look-ahead behavior.

6. The method according to any of the claims 1-5, **characterized in that**
the discretized subswept volumes are created at runtime.

7. A data processing system for anti-collision management of two or more single robots performing robotic operations, said data processing system comprising:
a processor; and an accessible memory, said data processing system particularly configured to:
a) receive inputs including a trajectory that each single robot follows to fulfill its robotic operations, whereby:
- each single robot along its trajectory is located within a single swept volume;
- the robotic operations of two or more single robots take place at least partly in a shared space such that at least two of the single swept volumes of individual single robots form an overlapping area wherein collisions between robots may occur;
b) create discretized subswept volumes between robotic path locations for each single robot according to one or more discretization criteria such that the operation of each single robot moving along the known trajectory is controlled in order to allow synchronized execution of robotic operations, whereby only overlapping discretized subswept volumes are considered for synchronization.

8. The data processing system according to claim 7, **characterized in that** the one or more discretization criteria are selected from a group consisting of:
- time;
- location;
- volume;
- speed;
- subgrouping of the robotic operations.

9. The data processing system according to any of the claims 7-8, **characterized in that**
time indexing is added to the robotic operations of all subswept volumes.

10. The data processing system according to any of the claims 7-9, **characterized in that**
once an overlapping area of the subswept volumes of two single robots is encountered, an operation priority is assigned being based upon a prioritization criteria whereby the operation priority is assigned even if there is currently no other robot operating within the overlapping area.

11. The data processing system according to claim 10, **characterized in that**
the prioritization criteria identify which of the single robots has a higher priority, whereby the prioritization criteria are selected from a group consisting of speed, importance, runtime, acceleration and look-ahead behavior.

12. The data processing system according to any of the claims 7-11, **characterized in that**
the discretized subswept volumes are created at runtime.

13. A non-transitory computer-readable medium encoded with executable instructions that, when executed, cause one or more data processing systems to manage anti-collision of two or more single robots performing robotic operations, by:
a) receive inputs including a trajectory that each single robot follows to fulfill its robotic operations, whereby:
- each single robot along its trajectory is located within a single swept volume;
- the robotic operations of two or more single robots take place at least partly in a shared space such that at least two of the single swept volumes of individual single robots form an overlapping area wherein collisions between robots may occur;
b) create discretized subswept volumes between robotic path locations for each single robot according to one or more discretization criteria such that the operation of each single robot moving along the known trajectory is controlled in order to allow synchronized execution of robotic operations, whereby only overlapping discretized subswept volumes are considered for synchronization.

14. The non-transitory computer-readable medium according to claim 13, **characterized in that**
the one or more discretization criteria are selected from a group consisting of:
- time;
- location;
- volume;
- speed;
- subgrouping of the robotic operations.

15. The non-transitory computer-readable medium according to any of the claims 13-14, **characterized in that**
time indexing is added to the robotic operations of all subswept volumes.
